# EUROPEAN PATENT APPLICATION

(11) **EP 4 624 436 A1**
(43) Date of publication of application: **01.10.2025**
(21) Application number: 24167658.4
(22) Date of filing: 28.03.2024
(51) Int. Cl.: C04B 7/147

(54) **A PROCESS FOR MAKING A HYDRAULIC BINDER**

(71) Applicant: Saint-Gobain Weber France, 94370 Sucy en Brie (FR)
(72) Inventor: LAUREN, Gunnar, 00380 HELSINLKI (FI); MATTSSON, Mika, 00380 HELSINKI (FI)
(74) Representative: Saint-Gobain Recherche

(57) **Abstract**

A process for making a hydraulic binder from ladle slag, comprising:
- a first cooling step (S1), wherein the ladle slag is cooled in air to a first temperature T1 of 150-300°C, preferably 160-250°C, then
- a first sieving step (S2), wherein particles of ladle slag having a size lower than 10 mm, preferably lower than 8 mm, are recovered, then
- a second cooling step (S3), wherein the particles recovered in the first sieving step are cooled in a rotary cooler from said first temperature T1 to a second temperature T2 of 30-80°C, preferably 35-50°C, then
- a milling step (S6), to obtain a ladle slag having a particle size distribution in volume having a D50 lower than 25 µm.

## Description

The invention relates to a process for making a hydraulic binder, especially a hydraulic binder for a mortar composition, based on a by-product of the industry.

Many mortar compositions used in the field of construction use cements of the aluminous type (also known by the abbreviation CAC for "calcium aluminate cements") or Sulfoaluminate type (or also known by the abbreviation CSA for "calcium sulfoaluminate cements"). These types of CAC cements have been developed for many years and their use is currently widespread. Indeed, these cements make it possible in particular to shorten the setting times and therefore to accelerate the hardening of the composition but also to control the dimensional variations during hardening or also to reinforce mechanical strength. Thus, aluminous or sulfoaluminate cements are used in a mixture with Portland cements (OPC) to achieve rapid setting. The accelerating power of the binary system depends on the CAC/OPC ratio. It is also known that aluminous or sulfoaluminate cements are used in a mixture with sources of calcium sulfate and optionally Portland cement to control the dimensional variations or else to obtain rapid endogenous hardening.

One of today's concerns is to significantly reduce the carbon footprint of the construction products. The processes for manufacturing clinker require operations of decarbonation, calcination, and clinkerization by heating, in particular at very high temperatures on the order of 1450°C. Aluminous and Portland cements are for example at the origin of emissions of more than 800 kg of CO₂ per ton of clinker produced. They also consume energy and natural resources.

Patent application WO 2022/214759 describes a hydraulic binder for a mortar composition comprising ladle slag having a particle size distribution by volume such that the D50 is less than 40 µm. Such a slag can, partially or totally, replace aluminous cements, while conferring the same properties of accelerated hardening of the composition, control of dimensional variations during the hardening, and improved mechanical strength. These properties make it particularly advantageous to add such a binder into mortar compositions for flooring products, in particular screeds or coatings, and for quick-setting mortars.

A slag is a by-product of an industrial process involving the melting of a starting material, said melting being intended to separate metals from an oxide phase, the latter being called "slag".

Ladle slags are steel slags resulting from the secondary metallurgy of steel. More specifically, the conversion steel (resulting from a cast steel converting the cast iron, in particular in an oxygen converter) or so-called electric steel (resulting from electric steel mill, in particular by the melting of scrap steel in an arc furnace) is poured into a ladle and transferred into an installation called "ladle furnace". Generally equipped with three graphite electrodes, the ladle furnace allows the desired shade to be made up by addition and deoxidation supplements and ensures that the temperature is maintained. Homogenization of liquid steel is ensured by gas stirring with argon or nitrogen. Ladle slag is the slag from the ladle furnace.

Ladle slags are distinguished, by their chemical and mineralogical composition, from other steel slags, namely blast furnace slag and other steel mill slags that are conversion steel slags (often called "LD slag") and electric steel slags. For example, the blast furnace slags used in hydraulic binders are generally amorphous (vitreous) since they were "granulated", that is to say cooled suddenly by watering. Ladle slags are also more basic than electric steel slags. However, it will be noted that the ladle slags have different chemical compositions and mineralogical compositions depending on their origin, depending in particular on the addition and deoxidation supplements used.

Currently, ladle slag-based hydraulic binder is produced by letting the slag cool in a steel or cast-iron pot, before emptying the slag in a pit for further cooling in ambient air, usually in the open air. The slag, which spontaneously disintegrates upon cooling, is then crushed and milled.

The inventors have found that it is possible to improve the reactivity of the hydraulic binder by using a different manufacturing process.

A first object of the invention is a process for making a hydraulic binder from ladle slag, comprising:
- a first cooling step, wherein the ladle slag is cooled in air to a first temperature T1 of 150-300°C, preferably 160-250°C, then
- a first sieving step, wherein particles of ladle slag having a size lower than 10 mm, preferably lower than 8 mm, are recovered, then
- a second cooling step, wherein the particles recovered in the first sieving step are cooled in a rotary cooler from said first temperature T1 to a second temperature T2 of 30-80°C, preferably 35-50°C, then
- a milling step, to obtain a ladle slag having a particle size distribution in volume having a D50 lower than 25 µm.

Another object is a hydraulic binder able to be obtained, or obtained, by such a process. Another object is a mortar or concrete composition comprising said hydraulic binder and aggregates.

The figures illustrate the invention in a non-limiting manner.
[FIG. 1] shows a schematic sequence of a method 1 according to the invention.
[Fig. 2] shows results from isothermal microcalorimetry.

Advantageously, the ladle slag is not contacted with water (especially liquid water) during the whole process. To this end, the storage of ladle slag preferably takes place in pits which are protected from the rain, or in silos. It has indeed been observed that ladle slag particles having been in contact with water contained more hydrated phases such as katoite and hydrogarnet, which are less reactive.

Before the first cooling step S1, the process may comprise a preliminary cooling step (not represented), wherein the ladle slag is slowly cooled in a pot, typically a steel or cast-iron pot. The duration of this preliminary cooling step is preferably 1-4 days, especially 2-3 days. Such a slow cooling makes it possible to increase the proportion of crystalline phases in the slag. This preliminary cooling step may take place in the premises of the steel producer and/or during the transportation to the production site of the hydraulic binder. At the end of the preliminary cooling step, the temperature of the ladle slag is preferably 350-500°C, especially around 400°C. Such a temperature ensures safe handling.

### First cooling step S1

The ladle slag 2 is then cooled in a first cooling step S1. The first cooling step S1 is preferably performed on a conveyor, typically a chain conveyor, such as a drag chain conveyor. The conveyor is preferably cooled, for example the conveyor is a water-cooled chain conveyor. The chain conveyor may also comprise a cooled plate, for example a water-cooled metallic plate, at the inlet, where the hot slag is poured on the conveyor. The first temperature T1 is controlled in order not to damage the sieving device used in the first sieving step S2. The first temperature T1 is 150-300°C, preferably 160-250°C, even more preferably 160-210°C.

### First sieving step S2

The first sieving step S2 makes it possible to eliminate very coarse particles, especially having a size of 10 mm and more, or of 8 mm and more. Such a size can be determined by sieving. This step has proven useful since coarse particles are more difficult to cool. Very coarse particles 4 may be returned to the steel producer, or they may be crushed and then once again submitted to the first sieving step S2. Finer particles 6, which are recovered by the first sieving step S2, are then moved to the second cooling step S3.

### Second cooling step S3

The second cooling step is performed in a rotary cooler. Such coolers make it possible to efficiently and quickly cool large batches of fine particles. The rotation prevents buildup and promotes uniform cooling. The rotary cooler preferably comprises a screw conveyor within a rotating drum. The screw conveyor helps move the slag along the drum's length, promoting even cooling and fast processing. The use of a rotary cooler also makes it possible to avoid contact with water during the cooling step, which, as explained before, reduces the formation of less reactive phases.

The second temperature T2 is at least 30°C in order to avoid condensation of water. T2 should not be too high in order to avoid damaging the means used for the further steps, especially the milling step. T2 is preferably 35-50°C.

The duration of the second cooling step S3 is preferably 1-200 minutes, especially 5-120 minutes, even 8-60 minutes. The second cooling step S3 may be a continuous or a discontinuous process. In a discontinuous process, the rotary cooler preferably comprises an inlet hopper, which is first filled with a batch of slag before starting the cooling.

### Second sieving step S4

Preferably, the process further comprises, after the second cooling step S3 and before the milling step S6, a second sieving step S4, in which particles 7 having a size lower than 4 mm, preferably lower than 2 mm are recovered, and these particles are subjected to the milling step S6, while the other particles 8 are removed. The particles 8 which are removed in the second sieving step S4 are preferably crushed in a step S8 and subjected again to the second sieving step S4.

The second sieving step S4 is not mandatory. In another embodiment, after the first sieving step S2, the particles can be directly subjected to the milling step S6, so without any second sieving step S4 or crushing step S8. In still other embodiments, after the first sieving step S2 the particles can be directly subjected to a crushing step S8, so without a preliminary sieving step S4. In such case, the particles may be subjected to an optional subsequent sieving step.

### Milling step S6

The milling step S6 is preferably carried out in a ball mill, in a vertical roller mill, in a jet mill, in a pendular mill or using a high-pressure grinding roll. The milling step is more preferably carried out in a ball mill. Ball milling is a known process where materials are milled using a rotating cylindrical chamber filled with grinding balls, usually made of steel or ceramic. As the chamber rotates, the balls create impact, friction, and shear forces that break down the material into smaller and smaller particles. The final particle size of the powder to obtain can easily be controlled by adjusting the rotation speed and the milling time. This process is especially advantageous in the framework of the invention in that it is a dry process, so that the ladle slag is not in contact with water during milling.

The process preferably comprises a classification step S7, either before or after the milling step S6, preferably after the milling step S6. The classification step S7 is preferably performed in an air classifier.

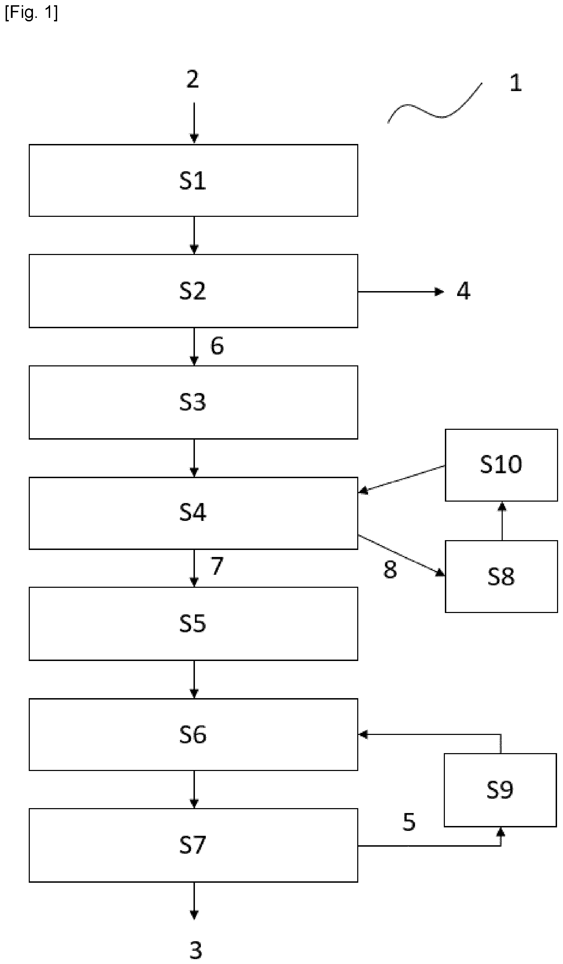

In a first embodiment, which is the one illustrated in [Fig. 1], after the milling step S6, the particles are subjected to a classification step S7 in an air classifier to separate the particles between fine particles 3 and coarser particles 5, and coarser particles 5 are subjected again to said milling step S6.

In a second embodiment, which is not illustrated, before the milling step, the particles are subjected to a classification step in an air classifier to separate the particles between fine particles and coarser particles, and coarser particles are subjected to said milling step. This second embodiment is less preferred since its yield (85-90%) is less than the yield obtained with the first embodiment (90-95%).

Using an air classifier, which is a dry process, makes it possible to obtain more reactive phases. In the air classifier, the ladle slag particles are fed into a chamber while a controlled stream of air is injected in said chamber, creating an upward current. Fine particles experience a higher upward force compared to their weight, allowing them to be carried higher by the air current, and are collected in a separate chamber or filter system where they are recovered as a hydraulic binder 3, while coarser particles 5 fall downwards and are collected through an outlet at the bottom of the chamber. In order to increase the yield of the process, these coarser particles 5 may optionally be once again subjected to the milling step S6, as illustrated in [Fig. 1].

### Separation steps S5, S9, S10

The process preferably comprises at least one separation step, wherein metallic particles are removed from the ladle slag particles. Metallic particles may then be returned to the steel producer for recycling purposes. Metallic particles are preferably removed by magnetic separation, for example using magnetic belts or magnetic drums. At least one separation step S5 is preferably performed between the second cooling step S3 and the milling step S6, preferably after the second sieving step S4. A separation step S9 is also preferably performed on the coarse particles 5 recovered from the air classifier S7, before sending them back to the milling step S6. Another separation step S10 is preferably performed to the particles that have been crushed in the crushing step S8 before they are once again subjected to the second sieving step S4.

The (final) hydraulic binder 3 has a particle size distribution by volume such that the D50 is preferably less than 25 µm, advantageously less than 20 µm, and in particular between 3 and 15 µm, or between 5 and 12 µm. The D50 is the size such that 50% by volume of the particles have a size less than this D50 value. The particle size distribution by volume is preferably determined by laser granulometry (also called laser diffraction granulometry). This fineness of the particles makes it possible in particular to give the slag good reactivity, allowing it to be used in a mortar composition and to obtain the expected properties in terms of setting time and mechanical strength. The D90 is preferably less than 100 µm, especially less than 60 µm.

The hydraulic binder preferably has a chemical composition which comprises the following constituents within the limits hereunder expressed as percentages by weight:
- SiO₂: 2-20%, particularly 5-15%, especially 7-12%,
- CaO: 30-60%, particularly 40-55%
- Al₂O₃: 15-50%, particularly 20-48%, or even 25-45%, particularly 30-40%.

The hydraulic binder may also comprise magnesia (MgO), in particular in a content of between 2 and 10%, or even between 3 and 8%.

In order not to negatively impact setting time, the iron oxide content in the hydraulic binder is preferably less than 5% by weight, especially less than 3% by weight, and even less than 2% by weight.

Particularly advantageously for the intended application, the hydraulic binder comprises at least one crystalline phase of calcium aluminate type (in particular C₃A and/or C₁₂A₇, this latter phase being called mayenite, and/or C₄AF). Preferably, the hydraulic binder comprises both C₃A and C₁₂A₇ phases, in a total content by weight of at least 20%, in particular of at least 30%, especially between 30 and 50%. The hydraulic binder further preferably comprises crystalline phases of calcium silicate type (in particular C₂S and/or C₃S). The content of C₂S is preferably at least 8% by weight, even at least 10% by weight, for example 10-20% by weight. The total content of katoite and hydrogarnet is preferably below 20% by weight, especially below 15% by weight, even below 10% by weight, for instance is 0-15wt%, or 1-10wt%. The amount of crystalline phases is relative to the weight of hydraulic binder, and can be determined by Rietveld refinement.

### Examples

The following non-limiting examples illustrate the invention.

In a comparative example, a hydraulic binder was obtained by letting a ladle slag (produced in Finland) cool in a steel pot to 400°C, before emptying the slag in a pit for further cooling in the open air. The slag spontaneously disintegrated upon cooling, and the slag was then crushed and milled to obtain particles having a volume particle distribution such that the D50 was 7 µm and the D90 was 23 µm.

In an example according to the invention, the same initial ladle slag, which had been submitted to the same preliminary cooling in a steel pot to 400°C, was subjected to the inventive process. After cooling, sieving and milling steps, during which the particles were protected from water, a hydraulic binder was obtained, having a D50 of 7 µm and a D90 of 18 µm.

In a first series of examples, the reactivity of both hydraulic binders was tested by isothermal microcalorimetry. A retardant (0.2wt% of tartaric acid) was added in both samples.

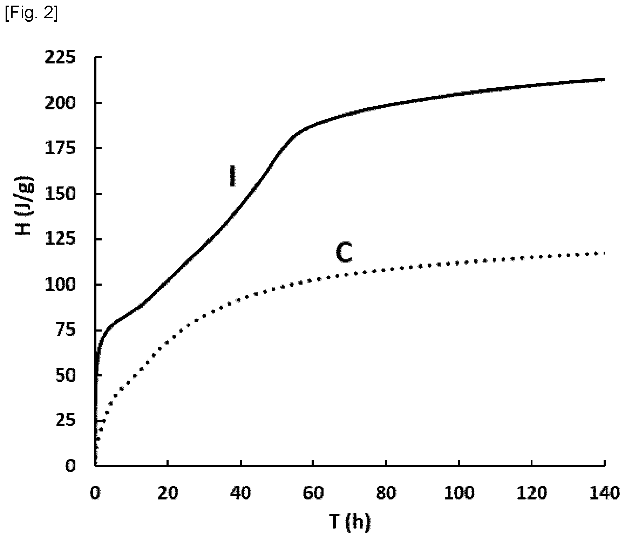

[Fig. 2] shows the evolution of the cumulative heat release ("H", in J/g) as a function of time ("T", in hours) for the comparative binder (labeled "C") and for the binder according to the invention (labeled "I"). The results show that the inventive binder is much more reactive than the comparative binder.

A mineralogical analysis by Rietveld refinement showed that the comparative binder comprises a large amount of less reactive phases such as katoite and hydrogarnet. The combined amount of both phases was indeed 28wt%, while it was only 11wt% or less in the case of the binder produced according to the invention. In addition, the latter comprises large amounts of reactive phases such as mayenite, C3A and C2S.

In a second series of examples, both binders were incorporated in dry mortar mixes comprising 2wt% Calcium Aluminate Cement, 10wt% of the ladle slag-based hydraulic binder, 3.5wt% Ordinary Portland Cement, 7wt% of calcium sulfate, 74.5wt% aggregates (sand and fillers), as well as 3wt% of additives (including redispersable polymers, accelerators, retarders, defoamers, thickeners...). The water content was 21%.

The mortar containing the ladle slag-based hydraulic binder according to the invention showed better performances compared to the one containing the comparative hydraulic binder. Especially, the Vicat initial setting time was 70 minutes (vs 110 minutes for the comparative mortar) and the Vicat final setting time was 75 minutes (vs 120 minutes). In addition, the flexural strength after 28 days was 7.5 MPa (vs 5.5 MPa), and the compressive strength after 28 days was 32 MPa (vs 22 MPa).

## Claims

1. A process (1) for making a hydraulic binder (3) from ladle slag (2), comprising:
- a first cooling step (S1), wherein the ladle slag (2) is cooled in air to a first temperature T1 of 150-300°C, preferably 160-250°C, then
- a first sieving step (S2), wherein particles of ladle slag (6) having a size lower than 10 mm, preferably lower than 8 mm, are recovered, then
- a second cooling step (S3), wherein the particles (6) recovered in the first sieving step (S2) are cooled in a rotary cooler from said first temperature T1 to a second temperature T2 of 30-80°C, preferably 35-50°C, then
- a milling step (S6), to obtain a ladle slag (3) having a particle size distribution in volume having a D50 lower than 25 µm.

2. The process of claim 1, further comprising, after the second cooling step (S3) and before the milling step (S6), a second sieving step (S4), in which particles (7) having a size lower than 4 mm, preferably lower than 2 mm are recovered, and these particles (7) are subjected to the milling step (S6), while the other particles (8) are removed.

3. The process of claim 2, wherein the particles (8) which are removed in the second sieving step (S4) are crushed (S8) and subjected again to the second sieving step (S4).

4. The process of claim 1, wherein after the first sieving step (S2), the particles are directly subjected to the milling step (S6).

5. The process of claim 1, wherein after the first sieving step (S2), the particles are directly subjected to a crushing step (S8).

6. The process according to any one of the preceding claims, wherein the first cooling step (S1) is performed on a conveyor, especially on a water-cooled chain conveyor.

7. The process according to any one of the preceding claims, wherein the duration of the second cooling step (S3) is 1-200 minutes, especially 5-120 minutes.

8. The process according to any one of the preceding claims, wherein the milling step (S6) is carried out in a ball mill, in a vertical roller mill, in a jet mill, in a pendular mill or using a high-pressure grinding roll.

9. The process according to any one of the preceding claims, further comprising at least one separation step (S5, S9, S10), wherein metallic particles are removed from the ladle slag particles.

10. The process according to any one of the preceding claims, further comprising a classification step (S7), either before or after the milling step (S6).

11. The process according to Claim 10, wherein, after the milling step (S6), the particles are subjected to a classification step (S7) in an air classifier to separate the particles between fine particles (3) and coarser particles (5), and the coarser particles (5) are subjected again to said milling step.

12. The process according to Claim 10, wherein, before the milling step, the particles are subjected to a classification step in an air classifier to separate the particles between fine particles and coarser particles, and coarser particles are subjected to said milling step.

13. The process according to any one of the preceding claims, wherein the ladle slag is not contacted with water during the whole process.

14. A hydraulic binder (3) able to be obtained by the process according to any one of the preceding claims, having a particle size distribution in volume having a D50 lower than 25 µm.

15. The hydraulic binder (3) according to claim 14, wherein the total content of katoite and hydrogarnet is below 20% by weight, especially below 15% by weight.
